(19)

Europäisches
Patentamt
European
Patent Office
Office européen
des brevets

(11)  EP 1 898 320 A1

(12)  **EUROPEAN PATENT APPLICATION**
published in accordance with Art. 153(4) EPC

(43) Date of publication:
**12.03.2008 Bulletin 2008/11**

(51) Int Cl.:
*G06F 17/30* (2006.01)

(21) Application number: **06766492.0**

(22) Date of filing: **08.06.2006**

(86) International application number:
**PCT/JP2006/311519**

(87) International publication number:
**WO 2006/137271 (28.12.2006 Gazette 2006/52)**

(84) Designated Contracting States:
**DE FR GB**

(30) Priority: **24.06.2005 JP 2005185511**

(71) Applicant: **Pioneer Corporation**
**Tokyo 153-8654 (JP)**

(72) Inventors:
• **ARAKAWA, Katsunori**
**Corp. Res. & Dev. Laboratory of**
**Tsurugashima-shi,**
**Saitama3502288 (JP)**
• **ODAGAWA, Satoshi**
**Corp. Res. & Dev. Laboratory of**
**Tsurugashima-shi,**
**Saitama3502288 (JP)**

• **MATSUSHITA, Fumio**
**Corp. Res. & Dev. Laboratory of**
**Tsurugashima-shi,**
**Saitama3502288 (JP)**
• **KODAMA, Yasuteru**
**Corp. Res. & Dev. Laboratory of**
**Tsurugashima-shi,**
**Saitama3502288 (JP)**
• **SHIODA, Takehiko**
**Corp. Res. & Dev. Laboratory**
**Tsurugashima-shi,**
**Saitama3502288 (JP)**

(74) Representative: **Haley, Stephen**
**Gill Jennings & Every LLP**
**Broadgate House**
**7 Eldon Street**
**London EC2M 7LH (GB)**

(54)  **MUSICAL COMPOSITION SEARCHING DEVICE, MUSICAL COMPOSITION SEARCHING METHOD, AND MUSICAL COMPOSITION SEARCHING PROGRAM**

(57)    A music retrieving apparatus (100) includes a property selecting unit (110) that selects a property corresponding to user preference from among plural properties, each of which indicates a property of music and a retrieving unit (120) that retrieves music corresponding to the user preference based on the property selected by the property selecting unit (110). The property selecting unit (110) includes a music obtaining unit (111) that obtains a retrieval-target music set to be a retrieval target and a retrieval-reference music set to be a reference for retrieving music; a calculating unit (112) that calculates, for each of the properties, a variance of property values in each set; and a selecting unit (113) that selects only the property corresponding to the user preference by comparing, for each of the properties, the variance of the property values in the retrieval-target music set and that in the retrieval-reference music set.

FIG.1

**Description**

TECHNICAL FIELD

This invention relates to a music retrieving apparatus, a music retrieving method, and a music retrieving program that retrieve music corresponding to user preference. Application of this invention is not limited to the music retrieving apparatus, the music retrieving method, and the music retrieving program.

BACKGROUND ART

Recently, with the larger-capacities of recording mediums and increased speed of communication systems, music playback apparatuses have been developed that store an enormous quantity of music data or that receive music data from a network and play the received music data, which require a technique of efficiently retrieving music corresponding to user preference.

Conventionally, as a technique of retrieving music, an information retrieving apparatus has been disclosed that extracts, based on an evaluation of each music piece such as "like" or "dislike" by a user, a property of each music piece such as a tempo and a harmonic variation level (HVL), calculates a distance between a property value of the music piece and the property value of another music piece, and retrieves music corresponding to user preference (see, for example, Patent Document 1 below).

Patent Document 1: Japanese Patent Laid-Open Publication No. 2003-157285

DISCLOSURE OF INVENTION

PROBLEM TO BE SOLVED BY THE INVENTION

However, there is a problem in that, as the information retrieving apparatus disclosed in Patent Document 1 performs, for each of the various kinds of properties, the distance calculation for every music piece evaluated as "like" or "dislike", the calculation processing volume is enormous. Furthermore, even for the music categorized as "like", a property may have large variance of property values and cannot be used to reflect user preference. Moreover, even an element such as noise, whose property value is dispersed, is used as a property, negatively affecting music retrieval.

To solve the above problems, it is an object of the present invention to provide a music retrieving apparatus, a music retrieving method, and a music retrieving program that efficiently retrieve music that precisely reflects user preference.

MEANS FOR SOLVING PROBLEM

To solve the above problems and achieve an object, a music retrieving apparatus according to the invention of claim 1 includes a property selecting unit that selects a property corresponding to a user preference from among a plurality of properties, each of which indicates a property of music; and a retrieving unit that retrieves music corresponding to the user preference based on the property selected by the property selecting unit.

Furthermore, a music retrieving method according to the invention of claim 11 includes a property selecting step of selecting a property corresponding to user preference from among a plurality of properties, each of which indicates a property of music; and a retrieving step of retrieving music corresponding to the user preference based on the property selected at the property selecting step, the property selecting step includes a music obtaining step of obtaining a retrieval-target music set to be a retrieval target and a retrieval-reference music set to be a reference for retrieving music; a calculating step of calculating, for each of the properties, a variance of property values in each set; and a selecting step of selecting the property corresponding to the user preference by comparing, for each of the properties, the variance of the property values in the retrieval-target music set and that in the retrieval-reference music set.

Moreover, a music retrieving program according to the invention of claim 12 causes a computer to execute the music retrieving method according to claim 11.

BRIEF DESCRIPTION OF DRAWINGS

Fig. 1 is a block diagram of a functional configuration of a music retrieving apparatus according to an embodiment;
Fig. 2 is a flowchart of music retrieval processing performed by the music retrieving apparatus;
Fig. 3 is a block diagram of a hardware configuration of a music playback apparatus according to an example;

## EP 1 898 320 A1

Fig. 4 is a block diagram of a functional configuration to implement a music-retrieval function of the music playback apparatus;

Fig. 5 is a schematic illustrating properties extracted by a property extracting unit;

Fig. 6 is a schematic of a configuration of music data stored in a music database;

Fig. 7 is a diagram of a preference-level entry display;

Fig. 8 is a diagram of a music-retrieval entry display;

Fig. 9 is a flowchart of music retrieval processing performed by a retrieval processing unit; and

Fig. 10 is a flowchart of music retrieval processing using distance calculation.

EXPLANATIONS OF LETTERS OR NUMERALS

100    MUSIC RETRIEVING APPARATUS

110    PROPERTY SELECTING UNIT

111    MUSIC OBTAINING UNIT

112    CALCULATING UNIT

113    SELECTING UNIT

120    RETRIEVING UNIT

121    PROPERTY-VALUE COMPARING UNIT

122    DETERMINING UNIT

130    RETRIEVED-SONG PROVIDING UNIT

300    MUSIC PLAYBACK APPARATUS

301    Digital Signal Processor (DSP)

302    Central Processing Unit (CPU)

303    Read Only Memory (ROM)

304    Random Access Memory (RAM)

305    Hard Disk Drive (HDD)

306    Hard Disk (HD)

307    DRIVE

308    RECORDING MEDIUM

309    IMAGE/AUDIO I/F

310    DISPLAY

311    SPEAKER

312    INPUT I/F

313    INPUT KEY

314    REMOTE CONTROLLER

315    COMMUNICATION 1/F

320    BUS

330    NETWORK

BEST MODE(S) FOR CARRYING OUT THE INVENTION

Referring to the accompanying drawings, exemplary embodiments of the music retrieving apparatus, the music retrieving method, and the music retrieving program according to the present invention are explained in detail below.

(EMBODIMENT)

(FUNCTIONAL CONFIGURATION OF MUSIC RETRIEVING APPARATUS)

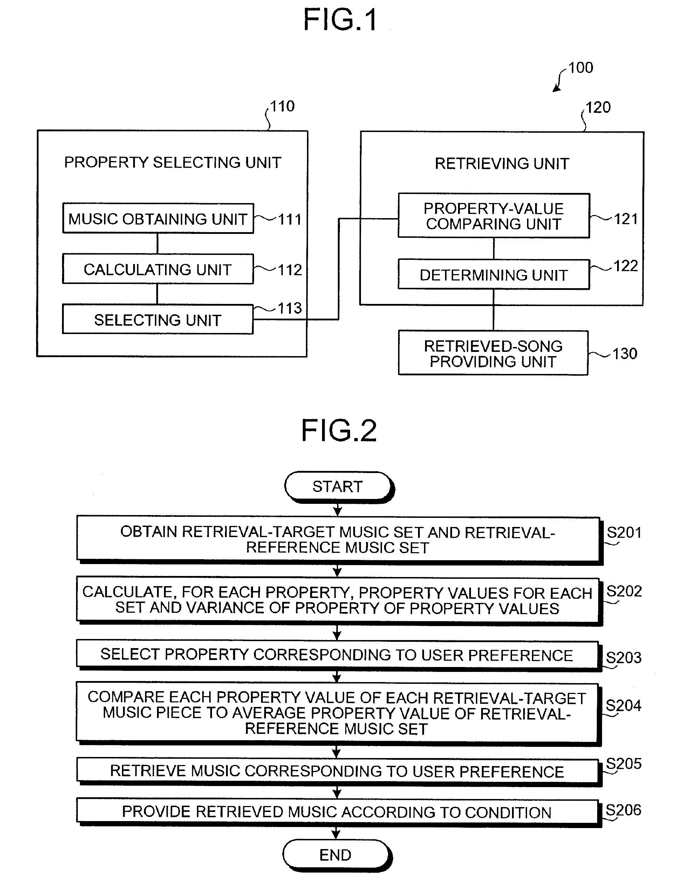

A music retrieving apparatus according to the embodiment is explained. Fig. 1 is a block diagram of a functional configuration of the music retrieving apparatus according to the embodiment. A music retrieving apparatus 100 includes a property selecting unit 110, a retrieving unit 120, and a retrieved-music providing unit 130. The property selecting unit 110 includes a music obtaining unit 111, a calculating unit 112, and a selecting unit 113. The retrieving unit 120 includes a property-value comparing unit 121 and a determining unit 122.
The property selecting unit 110 selects, based on retrieval reference music, a property corresponding to user preference from among various properties, each of which is an element indicating a structural property of the music. The retrieving unit 120 retrieves, from among retrieval target music that is targeted for retrieval, music corresponding to the user preference based on the property selected by the property selecting unit 110. The retrieved-music providing unit 130 provides, using a retrieval result output from the retrieving unit 120, retrieved music included in the retrieval result in an order that corresponds to a condition designated by the user.
Processing performed by the property selecting unit 110 and the retrieving unit 120 are explained in detail herein. The music obtaining unit 111 included in the property selecting unit 110 includes a retrieval-target-music selecting unit and a retrieval-reference-music selecting unit (not shown). The retrieval-target-music selecting unit selects, from all retrievable music, retrieval target music based on information concerning a condition designated by the user (hereinafter, "condition information"). For example, the retrieval-target-music selecting unit uses, as the condition information, at least one piece of attribute information concerning an artist name, a title, a genre, and/or a tonality (key) of the retrievable music.
On the other hand, the retrieval-reference-music selecting unit selects, based on evaluation values preliminarily assigned to plural music pieces among all the retrievable music and from the retrieval target music selected by the retrieval-target-music selecting unit, retrieval reference music that is a reference for music retrieval. As a selecting method of retrieving the retrieval reference music, the user may designate retrieval reference music pieces individually, or the user may preliminarily evaluate some music pieces, where the retrieval-reference-music selecting unit selects the retrieval reference music by using, as a parameter, a scaled evaluation value assigned to each of the music pieces by the user, for example.
Thus, the music obtaining unit 111 obtains a retrieval-target music set and a retrieval-reference music set by obtaining the music pieces selected by the retrieval-target-music selecting unit and the retrieval-reference-music selecting unit.
The calculating unit 112 calculates property values for the retrieval-target music set and the retrieval-reference music set, and also calculates, for each property, the variance of the calculated property values in both the retrieval-target music set and the retrieval-reference music set. The property value numerically represents an element of a structural property of the music, and is included in music data in advance. The property includes, for example, an HVL, average beats per minute (BPM), a maximum beat level (MBL), average signal level (ASL), a maximum signal level (MSL), etc. The user can select the property to be used.
The variance indicates variance of property values detected from each music set. In other words, when the variance of property values is small, it indicates that there are many similar music pieces within the set and the property (for example, the HVL) adequately represents a property of the music set (the retrieval target music and the retrieval reference music). Conversely, when the variance is large, it indicates that the property varies and does not adequately represent a property of the music set.
The selecting unit 113 compares, for each property, the variances in the retrieval-target music set and the retrieval-reference music set calculated by the calculating unit 112, and selects only the property that corresponds to user preference. More specifically, the selecting unit 113 selects any of the properties having a value whose variance in the retrieval-reference music set is smaller than that in the retrieval-target music set.

Next, processing performed by the retrieving unit 120 is explained in detail. The property-value comparing unit 121 included in the retrieving unit 120 compares each property value of each retrieval target music piece to an average of the property values of the retrieval-reference music set, with respect to the property selected by the selecting unit 113. As a method of comparison performed by the property-value comparing unit 121, for example, a method of calculating, by the Euclidean distance calculation, a distance between a property value of a retrieval target music piece and the average property value can be employed. In this case, the shorter the calculated distance is, the closer the compared values are.

The determining unit 122 determines whether the music concerned reflects user preference and outputs a result of the determination to the retrieval-music providing unit 130, where the closer the two values compared by the property-value comparing unit 121 are, the more substantially the music reflects user preference. The user can set how the result is output. For example, the music having a distance within a predetermined distance is output, or the music is output in descending order according to the distance.

The retrieved-music providing unit 130 provides, using the retrieval result, music included in the retrieval result (hereinafter, "retrieved music") in the order corresponding to the condition designated by the user. Accordingly, the retrieved-music providing unit 130 can provide the retrieved music in a desired order corresponding to various conditions such as an ascending or descending order according to user preference.

(MUSIC RETRIEVAL PROCEDURE OF MUSIC RETRIEVING APPARATUS)

A music retrieval procedure of the music retrieving apparatus according to the embodiment is explained herein. Fig. 2 is a flowchart of music retrieval processing performed by the music retrieving apparatus. In the flowchart of Fig. 2, the music obtaining unit 111 included in the property selecting unit 110 obtains the retrieval-target music set and the retrieval-reference music set (step S201). The calculating unit 112 calculates, for each property, property values for each set and variance of the property values (step S202). The selecting unit 113 selects, using a result of the calculation at step S202, a property corresponding to user preference from among the properties (step S203).

The property-value comparing unit 121 compares, with respect to the property selected by the selecting unit 113 at step S203, each property value of each retrieval target music piece and an average property value of the retrieval-reference music set (step S204). The determining unit 122 determines, based on the comparison at step 204, whether the music concerned reflects user preference, where the closer the compared values are to each other, the more substantially the music reflects user preference, and retrieves music corresponding to user preference (step S205). The retrieved-music providing unit 130 provides, using a result of the retrieval at step S205, retrieved music according to the condition designated by the user, and a series of the music retrieval processing in the flowchart ends.

As explained above, according to the music retrieving apparatus, the music retrieving method, and the music retrieving program of the embodiment, only the property that reflects user preference is used as a retrieval reference, thereby enabling a precise and efficient retrieval of music that precisely reflects user preference.

An Example according to the embodiment of the present invention is explained in detail. A case in which the music retrieving apparatus is applied to a music playback apparatus is explained herein.

[EXAMPLE]

(HARDWARE CONFIGURATION OF MUSIC PLAYBACK APPARATUS)

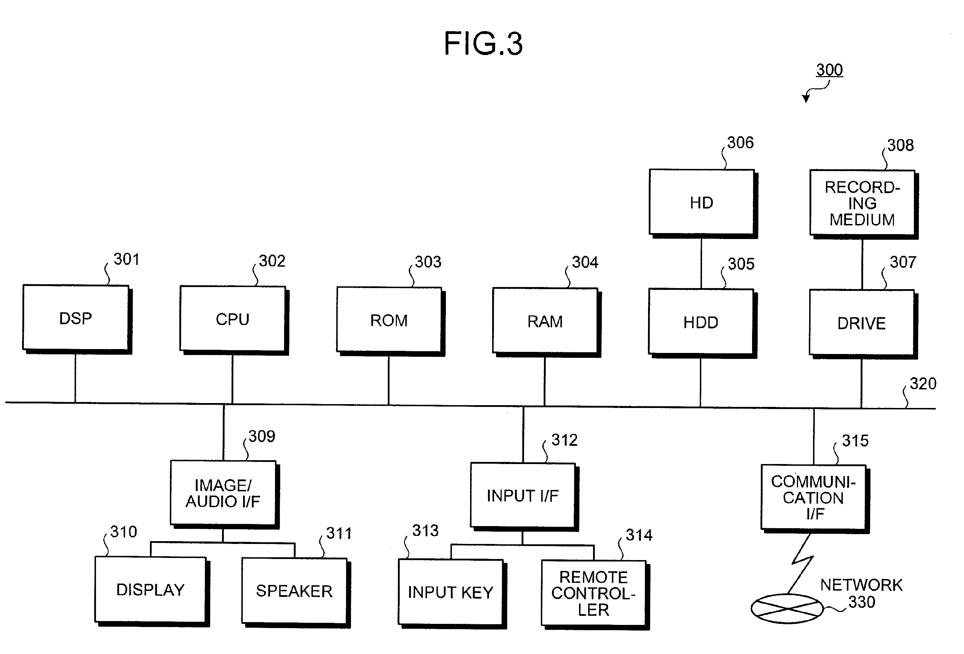

Fig. 3 is a block diagram of a hardware configuration of the music playback apparatus according to the example of the present invention. As shown in Fig. 3, a music playback apparatus 300 includes a DSP 301, a CPU 302, an ROM 303, an RAM 304, an HDD 305, an HD 306, a drive 307, a recording medium 308, an image/audio I/F 309, a display 310, a speaker 311, an input I/F 312, an input key 313, a remote controller 314, and a communication I/F 315. The components 301 to 315 are connected via a bus 320. The communication I/F 315 is connected to a network 330.

The DSP 301 is a specialized device for extraction processing of a property of music, and can perform extraction processing faster than the CPU 302. The CPU 302 controls the entire music playback apparatus 300 by performing processing other than the processing performed by the DSP 301. The ROM 303 stores a program such as a boot program. The RAM 304 is used as a work area of the DSP 301 and the CPU 302.

The HDD 305 controls the writing/reading of data to/from the HD 306 under the control of the DSP 301 and the CPU 302. The HD 306 stores data that is written into the HD 105 under the control of the HDD 305. The drive 307 controls the writing/reading of data to/from the recording medium 308 under the control of the DSP 301 and the CPU 302. The recording medium 308 is a removable recording medium such as a compact-disc (CD) and a digital versatile disc (DVD) from which stored data is read under the control of the drive 307. A writable recording medium as the recording medium 308 may be, for example, a compact-disc read-only memory (CD-ROM) (compact-disc recordable (CD-R), compact-disc rewritable (CD-RW)), a magneto optical (MO) disc, a memory card, etc.

The image/audio I/F 309 is connected to the display 310 for displaying an image and the speaker 311. The display 310 displays image data when the music data is a music video. The display 310 may be a touch panel, and information input though the touch panel may be output to the input I/F 312. The speaker 311 outputs music corresponding to music data. Instead of the speaker 311, a headphone may be connected to the image/audio I/F 309 to enjoy music individually, for example.

The I/F 312 is connected to the input key 313 to input characters, numbers, various instructions, etc., and to the remote controller 314 having a part of or the entire input function of the input key 313. The input I/F 312 inputs data output from the input key 313 or the remote controller 314 to hardware under the control of the DSP 301 or the CPU 302. The communication I/F 315 is connected to the network 330, and obtains music data from the network 330.

Music data are mainly stored in the HD 306 and the recording medium 308, and some of the music data are preliminarily assigned, by the user, preference levels, respectively. A preference level is a scaled-evaluation value of the music indicating user preference. In this example, the preference levels of 1 to 5 (a higher value indicates a higher rating of favorability of the user) are assigned to some of the music data, for example.

The music playback apparatus 300 has a music retrieval function. The music playback apparatus 300 can retrieve, using the music retrieval function, music data corresponding to user preference from music data stored in the HD 306 and the recording medium 308, and outputs the retrieved music to the display 310 and the speaker 311 for playback. Furthermore, the music playback apparatus 300 can obtain, when obtaining music data by the communication I/F 315 through the network 330, only the music data corresponding to user preference by using the music retrieval function.

(FUNCTIONAL CONFIGURATION OF MUSIC-RETRIEVAL FUNCTIONING UNIT OF MUSIC PLAYBACK APPARATUS)

The music retrieval function of the music playback apparatus 300 shown in Fig. 3 is explained in detail.

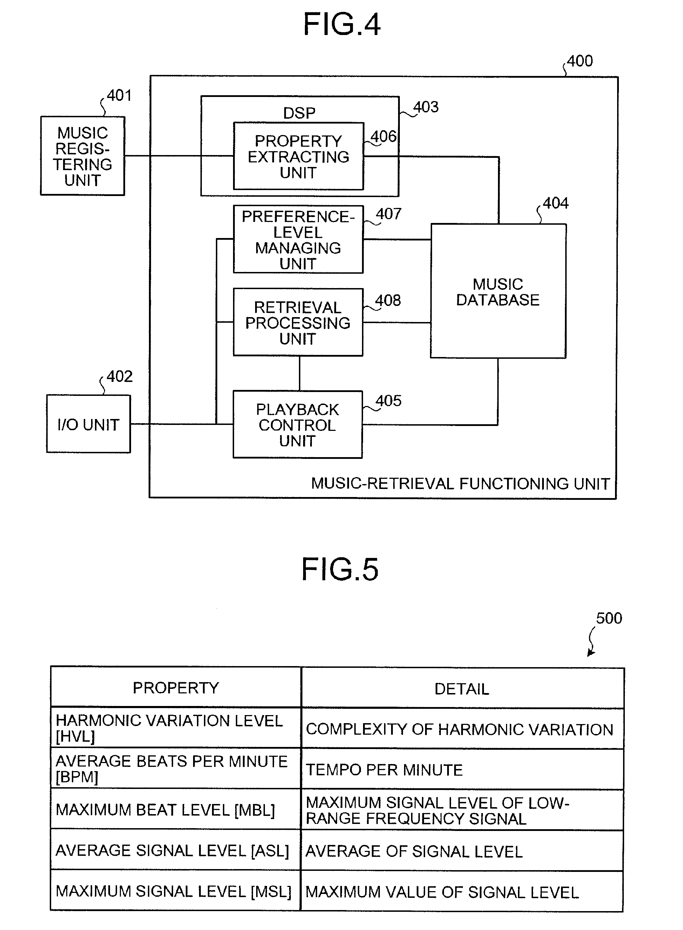

Fig. 4 is a block diagram of a functional configuration to implement a music-retrieval function of the music playback apparatus. A music-retrieval functioning unit 400 of the music playback apparatus 300 is connected to a music registering unit 401 and an input/output unit (I/O unit) 402, and includes a DSP processing unit 403, a music database 404, a playback control unit 405, a reference managing unit 407, and a retrieval processing unit 408. The DSP processing unit 403 includes a property extracting unit 406.

The music registering unit 401 receives and registers a designated music piece. More specifically, the music registering unit 401 receives, among music data stored in the HD 306 and the recording medium 308 shown in Fig. 3, music data designated by the music-retrieval functioning unit 400 as the retrieval target music, and music data obtained by the communication I/F 315 through the network 330, and registers the received music data in the music database 404 constituted by the HD 306 under the control of the CPU 302.

The music registering unit 401 confirms, at the time of registration, whether the received music data includes basic information (attribute data) such as an artist name, a title, a genre, etc. When some of the attribute data is missing, the music registering unit 401 may register only the stored attribute data, or obtain the missing data through the network 330. Otherwise, the music registering unit 401 displays, on the display 310, information indicating that some of the attribute data is missing, and prompts the user to input the missing data by the input key 313 or the remote controller 314.

The I/O unit 402 outputs data input by the user to the music-retrieval functioning unit 400 through the I/F 312, and outputs music data output from the music-retrieval functioning unit 400 to the display 310 and the speaker 311.

The property extracting unit 406 included in the DSP processing unit 403 extracts properties from the music data registered by the music registering unit 401. The DSP processing unit 403 performs, using the DSP 301, only the processing performed by the property extracting unit 406. Therefore, the DSP processing unit 403 can speedily perform property extraction, which usually consumes much time. The processing performed by the DSP processing unit 403 is performed by the DSP 301 in this example, but may be performed by the CPU 302 in a similar manner as other functional units. The properties extracted are explained herein.

Fig. 5 is a schematic illustrating the properties extracted by the property extracting unit. As shown in a table 500, the property extracting unit 406 uses, as the properties, an HVL indicating the complexity of harmonic variance, a BPM indicating a tempo per minutes, an ASL indicating an average signal level, and an MSL indicating a maximum signal level.

In addition to the above properties, a tonality (key) indicating a main key of music can be an important property. The property extracting unit 406 can extract the tonality in a same manner as other properties. However, the tonality is not indicated by a continuous value as other properties. Therefore, the tonality is utilized as one of the attribute data, differently from other properties.

The music database 404 stores, by assigning an identifier (ID) to each music piece, the music data (including the attribute data) registered by the music registering unit 401, the properties and the tonality that are extracted by the property extracting unit 406. Furthermore, a preference level of each music piece is input to the music database 404 by the preference-level managing unit 407 explained hereinafter, and stored in the music database 404 as one of the music data. A configuration of the music data stored in the music database 404 is explained herein.

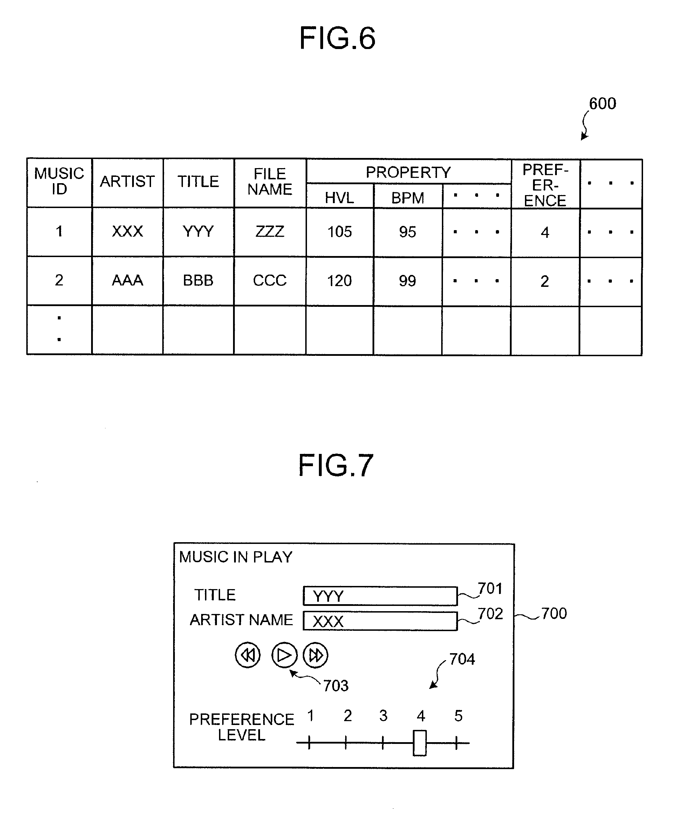

Fig. 6 is a schematic of a configuration of music data stored in the music database 404. As shown in the schematic 600, one music ID is assigned to one music piece, and attribute data registered by the music registering unit 401 such as an artist name, a title, a file name, etc., the properties extracted by the property extracting unit 406 and the preference level input by the preference-level managing unit 407 are stored.

Referring back to Fig. 4, the preference-level managing unit 407 receives a preference level of each music piece input by the user through the I/O unit 402, and outputs the received preference level(s) corresponding to the input music data to the music database 404 for storage. The preference level is a value that indicates a scaled user preference level concerning a music piece, and includes, for example, 5 (like), 4 (somewhat like), 3 (fair), 2 (somewhat dislike), 1 (dislike), etc.

Fig. 7 is a diagram of a preference-level entry display. As shown in a display 700, when music data is played, a title 701 and an artist name 702 are displayed. The music in play is controlled by a control button 703, and a preference level is selected by the preference-level selecting unit 704. A preference level for known music other than the music in play shown in Fig. 7 may be selected on a display displaying only a title.

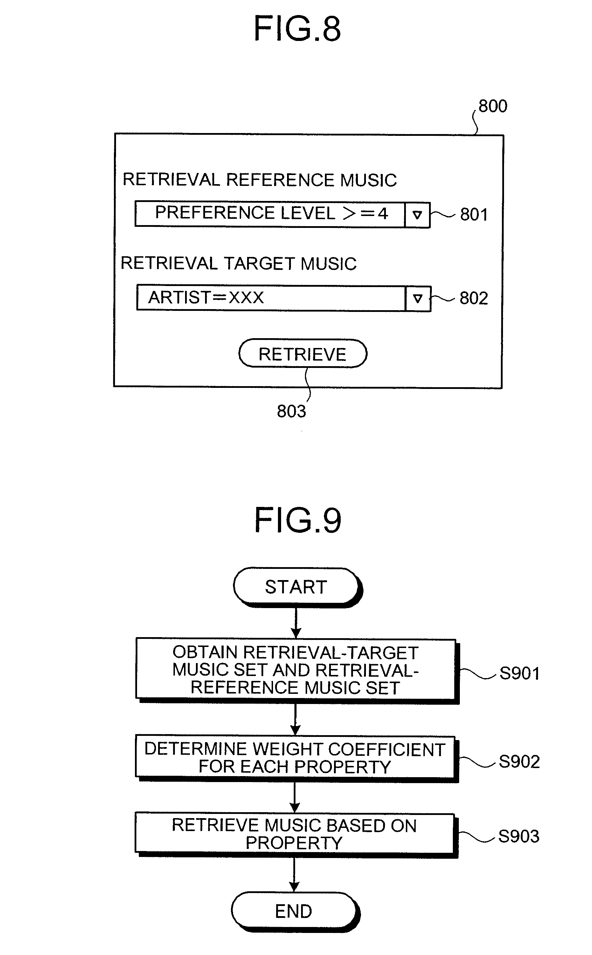

Referring back to Fig. 4, the retrieval processing unit 408 performs music retrieval according to a retrieval request input by the user through the I/O unit 402. Fig. 8 is a diagram of a music-retrieval entry display. As an example of the music retrieval shown in a display 800, the user designates a retrieval condition for retrieval reference music 801 and retrieval target music 802.

The retrieval condition for the retrieval reference music 801 is designated on the display 700 shown in Fig. 7 by the preference level such as "preference level>=4", "preference level=5", and "preference level<=4". Accordingly, if the music whose preference level is small is designated as the retrieval condition for the retrieval reference music 801, only the music disliked by the user can be retrieved.

The following conditions are examples of the retrieval conditions for the retrieval target music.

- All music: All music registered in the music database is targeted.
- Artist=XXX: Music whose artist name is XXX is targeted.
- Genre=XXX: Music of genre XXX is targeted.
- X<BPM<Y: Music whose property value is between X and Y is targeted.
- Tonality=Major: Music corresponding to a major chord is targeted.

When the retrieval conditions for the retrieval reference music 801 and the retrieval target music 802 are designated, the user pushes a retrieval button 803 to start the music retrieval. A music retrieval procedure will be explained in detail hereinafter. A retrieval result of the music retrieval performed by the retrieval processing unit 408 is output to the music database 404. The music database 404 outputs music data retrieved by the retrieval processing unit 408 to the playback control unit 405. The playback control unit 405 plays the input music data, and outputs the music data in-play to the I/O unit 402. When image data is included in the music data, the image data is output to the I/O unit 402 with the music data.

(MUSIC RETRIEVAL PROCEDURE OF MUSIC PLAYBACK APPARATUS)

A music retrieval procedure performed by the music-retrieval functioning unit 400 (see Fig. 4) of the music playback apparatus according to the embodiment is described. Fig. 9 is a flowchart of music retrieval processing performed by a retrieval processing unit. In the flowchart shown in Fig. 9, a retrieval-target music set and a retrieval-reference music set are obtained (step S901). A weight coefficient for each property is determined (step S902).

The weight coefficient is assigned as an evaluation of whether each property reflects user preference. In other words, "1" is set to the weight coefficient in the case when a property reflects user preference, and "0" is set to the weight coefficient in the case when a property does not reflect user preference. The property to which the weight coefficient "0" is assigned is not used for the following retrieval processing since the property value becomes "0". Accordingly, music that precisely reflects user preference can be retrieved by the retrieval processing using only the property reflecting user preference. Furthermore, increase in the processing speed can be achieved by using the weight coefficient since retrieval processing using a property that is not related to user preference can be omitted.

Music retrieval is performed using the property reflected the weight coefficient determined at step S902 (step S903), and a series of the music retrieval processing ends. As an example of a specific music retrieval procedure using a property, music retrieval using a distance calculation for a property of the retrieval-reference music and a property of the retrieval-target music is explained.

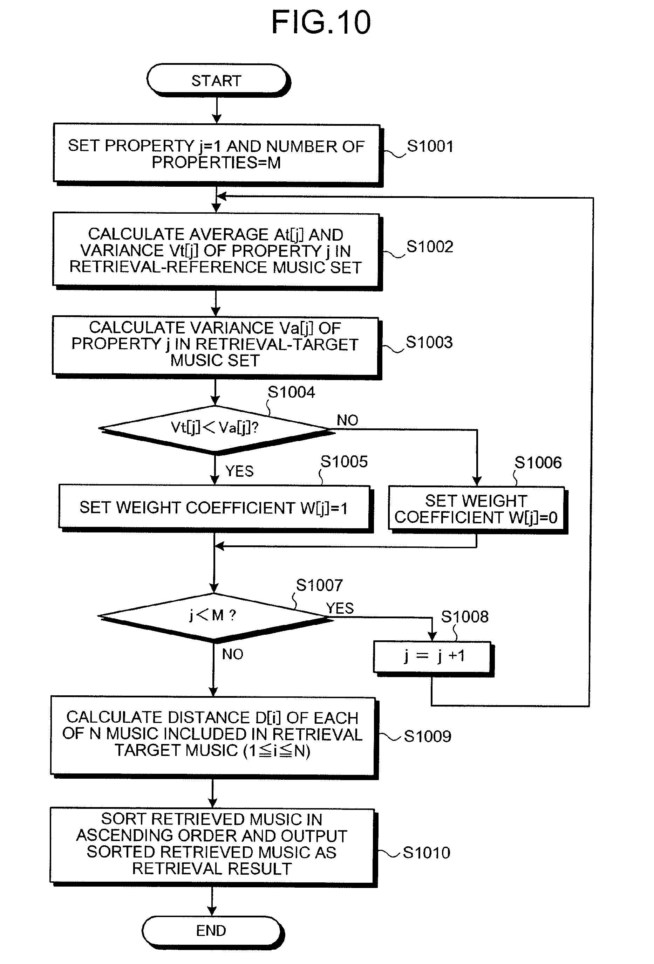

Fig. 10 is a flowchart of music retrieval processing using distance calculation. In the flowchart shown in Fig.

10, a property j=1 and the number of properties=M are set (step S1001). The property j is a number corresponding to the type of the property used for the music retrieval, for example, 1=HVL, 2=BPM, 3=MBL, etc (see Fig. 5). The number is preliminarily assigned to a property or automatically assigned when the property is selected. M indicates the number of these properties.

An average At[j] and a variance Vt[j] of the property j in the retrieval-reference music set are calculated (step S1002), and a variance Va[j] of the property j in the retrieval-target music is set (step 51003).

It is determined whether the variance Vt[j] calculated at step S1002 is smaller than the variance Va[j] calculated at step S1003 (step S1004).

When the variance Vt[j] is smaller than the variance Va[j] (step S1004: YES), a weight coefficient for the property j is set to 1 (step S1005). When the variance Vt[j] is equal to or larger than the variance Va[j] (step S1004: NO), the weight coefficient for the property j is set to 0 (step 51006).

It is determined whether the property j is smaller than the number of properties M (step S1007). When the property j is smaller than the number of properties M (step S1007: YES), the property j is shifted to a property j+1 (step S1008), the processing proceeds to step S1002. Similarly, the processing at step S1002 to step S1007 are performed for the next property j, and the weight coefficient is determined.

When the property j is equal to the number of properties M at step S1007 (step S1007: NO), weight coefficients for all of the properties have been respectively determined (due to a property of the processing, the property j is never larger than the number of properties).

A distance D[i] of each of retrieval target music (including N music) is calculated using the property for which a weight coefficient is determined (step S1009). Distance calculations for each of the N music are performed using Equation (1) below at step S1009 (1≤i≤N) where P[i][j] indicates a value of the property j of i-th music piece included in the retrieval-target music set.

[Equation 1]

$$D[i] = \sqrt{\sum_{j=1}^{M} W[j](P[i][j] - At[j])^2}$$

(1)

The distance calculation for all music is finished at step S1009, the distances D[i] are sorted in ascending order to be output as a retrieval result (step S1010), and a series of the music retrieval processing ends. The distances D[i] may be sorted in descending order as another example.

The determination at step S1004 may be performed by Equation (2) given below as another example.

[Equation 2]

$$\frac{Vt}{Va} < \alpha$$

(2)

The user can set $\alpha$ in above Equation (2). When $\alpha$ is set to 1, Equation (2) indicates the same determination as step S1004. When $\alpha$, is set smaller than 1, only the property that strongly represents user preference can be used for the distance calculation.

Furthermore, when the determination at step S1004 is YES, an inverse of the variance Vt[j] of the property j of the retrieval-reference music may be set as the weight coefficient.

As explained above, according to the music retrieving apparatus, the music retrieving method, and the music retrieving program, music that precisely reflects user preference can be precisely and efficiently retrieved by using only the property reflecting user preference as a retrieval reference. In other words, not all of the properties are used at the time of the music retrieval, only the property whose variance for all of the retrieval target music is small, i.e., only the property that has high convergence is used for the music retrieval. Therefore, negative effects on the music retrieval result caused by using a property having little distributional bias as with the conventional technique can be eliminated. Furthermore, as long as evaluation by preference level is performed for some music, other music that has not been subjected to the evaluation can be also retrieved.

Furthermore, the music retrieving apparatus 100 according to the present invention can perform further music retrieval without consuming much processing time provided that the retrieval target music and the retrieval reference music selections do not significantly change, since the processing explained in Fig. 9 has been already performed and the previous retrieval result can be used.

According to the embodiment, music that does not reflect user preference is not subjected to the music retrieval processing from the beginning since the retrieval target music is designated by the retrieval processing unit 408. Therefore, the number of the retrieval target music is limited and the music retrieval processing speed can be increased. Furthermore, the music retrieving apparatus 100 can avoid providing, to the user, music that corresponds to user preference with respect to a property but does not correspond to user preference with respect to attribute information such as a genre and an artist name. Furthermore, as the retrieval target music is designated based on more specific conditions, the music retrieval reflects user preference more precisely, and the number of the retrieval target music pieces becomes less, resulting in an improvement of the efficiency of the music retrieval processing.

Furthermore, when plural users such as a family uses the music retrieving apparatus 300 according to the embodiment, a user-switch processing unit may be newly provided, and music database 404 may be provided for each user. Such configuration enables precise and fast music retrieval in a similar manner as when a single user uses the apparatus since conditions for the retrieval target music and retrieval reference music is switched for each user.

Furthermore, in addition to the configuration shown in Fig. 3, the music playback apparatus 300 may include a receiving unit that receives a digital broadcasting wave. In the case of such configuration, the music playback apparatus 300 outputs, by receiving the digital broadcasting wave, contents to the display 310 or the speaker 311 via the image/ audio I/F 309. The user evaluates the contents in play by assigning a preference level thereto, for example. The contents include not only a music program, but also a film, a drama, information program, and music used as background music (BGM). A property can be extracted from such music data included in the contents. Therefore, music that is not obtained by the user can be used as the retrieval reference music for music retrieval.

The music retrieving method explained in the present embodiment can be implemented by a computer such as a personal computer and a workstation executing a program that is prepared in advance. This program is recorded on a computer-readable recording medium such as a hard disk, a flexible disk, a CD-ROM, an M0, and a DVD, and is executed by being read out from the recording medium by a computer. This program can be a transmission medium that can be distributed through a network such as the Internet.

**Claims**

1. A music retrieving apparatus comprising:

   a property selecting unit that selects a property corresponding to a user preference from among a plurality of properties, each of which indicates a property of music; and
   a retrieving unit that retrieves music corresponding to the user preference based on the property selected by the property selecting unit.

2. The music retrieving apparatus according to claim 1, further comprising a retrieved-music providing unit that provides retrieved music included in a retrieval result retrieved by the retrieving unit in an order according to a condition designated by a user.

3. The music retrieving apparatus according to claim 1, wherein the property selecting unit includes
   a music obtaining unit that obtains a retrieval-target music set to be a retrieval target and a retrieval-reference music set to be a reference for retrieving music;
   a calculating unit that calculates, for each of the properties, a variance of property values in each set; and
   a selecting unit that selects the property corresponding to the user preference by comparing, for each of the properties, the variance of the property values in the retrieval-target music set with that in the retrieval-reference music set.

4. The music retrieving apparatus according to claim 3, wherein the retrieving unit includes
   a property-value comparing unit that compares, with respect to the property selected by the selecting unit, a property value of each retrieval target music piece among the retrieval target music with an average property value of the retrieval-reference music set; and
   a determining unit that determines and outputs, as a retrieval result, music that reflects the user preference, wherein the closer the values compared by the property-value comparing unit are to each other, the more substantially the music reflects the user preference.

**5.** The music retrieving apparatus according to claim 3, wherein the music obtaining unit includes
a retrieval-target-music selecting unit that selects, from among all retrievable music, retrieval target music based on condition information concerning a user-designated condition; and
a retrieval-reference-music selecting unit that selects, from among the retrieval target music selected by the retrieval-target-music selecting unit, retrieval reference music based on an evaluation value preliminarily assigned, respectively, to a plurality of music pieces among all of the retrievable music.

**6.** The music retrieving apparatus according to claim 3, wherein the selecting unit selects, as the property corresponding to the user preference, a property whose variance in the retrieval-reference music set is smaller than that in the retrieval-target music set.

**7.** The music retrieving apparatus according to claim 3, wherein the selecting unit selects, as the property corresponding to the user preference, a property having a variance in the retrieval-reference music set that when divided by that in the retrieval-target music set yields a quotient smaller than a predetermined value.

**8.** The music retrieving apparatus according to claim 1, wherein the property includes, as a parameter indicating a structural music property of the music, at least one of a harmonic variation level, beats per minutes, a maximum beat level, an average signal level, and a maximum signal level.

**9.** The music retrieving apparatus according to claim 5, wherein the retrieval-target-music selecting unit uses, as the condition information, attribute information concerning at least one of an artist name, a title, a genre, and a tonality of the retrievable music.

**10.** The music retrieving apparatus according to any one of claims 4 to 9, wherein the property value of each retrieval target music piece and the average property value of the retrieval-reference music set are closer to each other as a distance calculated by using a Euclid distance calculation becomes shorter.

**11.** A music retrieving method comprising:

a property selecting step of selecting a property corresponding to user preference from among a plurality of properties, each of which indicates a property of music; and
a retrieving step of retrieving music corresponding to the user preference based on the property selected at the property selecting step, wherein
the property selecting step includes
a music obtaining step of obtaining a retrieval-target music set to be a retrieval target and a retrieval-reference music set to be a reference for retrieving music;
a calculating step of calculating, for each of the properties, a variance of property values in each set; and
a selecting step of selecting the property corresponding to the user preference by comparing, for each of the properties, the variance of the property values in the retrieval-target music set and that in the retrieval-reference music set.

**12.** A music retrieving program that causes a computer to execute the music retrieving method according to claim 11.

# FIG.1

# FIG.2

# FIG.3

# FIG.4

401 MUSIC REGIS-TERING UNIT

402 I/O UNIT

400

403 DSP

406 PROPERTY EXTRACTING UNIT

407 PREFERENCE-LEVEL MANAGING UNIT

408 RETRIEVAL PROCESSING UNIT

405 PLAYBACK CONTROL UNIT

404 MUSIC DATABASE

MUSIC-RETRIEVAL FUNCTIONING UNIT

# FIG.5

500

| PROPERTY | DETAIL |
|---|---|
| HARMONIC VARIATION LEVEL [HVL] | COMPLEXITY OF HARMONIC VARIATION |
| AVERAGE BEATS PER MINUTE [BPM] | TEMPO PER MINUTE |
| MAXIMUM BEAT LEVEL [MBL] | MAXIMUM SIGNAL LEVEL OF LOW-RANGE FREQUENCY SIGNAL |
| AVERAGE SIGNAL LEVEL [ASL] | AVERAGE OF SIGNAL LEVEL |
| MAXIMUM SIGNAL LEVEL [MSL] | MAXIMUM VALUE OF SIGNAL LEVEL |

# FIG.6

600

| MUSIC ID | ARTIST | TITLE | FILE NAME | PROPERTY | | | PREF-ER-ENCE | · · · |
| --- | --- | --- | --- | --- | --- | --- | --- | --- |
| | | | | HVL | BPM | · · · | | |
| 1 | XXX | YYY | ZZZ | 105 | 95 | · · · | 4 | · · · |
| 2 | AAA | BBB | CCC | 120 | 99 | · · · | 2 | · · · |
| · · | | | | | | | | |

# FIG.7

MUSIC IN PLAY

TITLE     [ YYY ] ⌐701

ARTIST NAME     [ XXX ] ⌐702    ⌐700

(◀◀) (▷) (▶▶)

⌐703      ⌐704

PREFERENCE LEVEL    1   2   3   4   5

# FIG.8

RETRIEVAL REFERENCE MUSIC

PREFERENCE LEVEL >=4 ▽ ～ 801

RETRIEVAL TARGET MUSIC

ARTIST=XXX ▽ ～ 802

( RETRIEVE )

803

800

# FIG.9

START

OBTAIN RETRIEVAL-TARGET
MUSIC SET AND RETRIEVAL-
REFERENCE MUSIC SET ～ S901

DETERMINE WEIGHT COEFFICIENT
FOR EACH PROPERTY ～ S902

RETRIEVE MUSIC BASED ON
PROPERTY ～ S903

END

# FIG.10

START

SET PROPERTY j=1 AND NUMBER OF PROPERTIES=M — S1001

CALCULATE AVERAGE At[j] AND VARIANCE Vt[j] OF PROPERTY j IN RETRIEVAL-REFERENCE MUSIC SET — S1002

CALCULATE VARIANCE Va[j] OF PROPERTY j IN RETRIEVAL-TARGET MUSIC SET — S1003

S1004

Vt[j] < Va[j]?

NO →

YES ↓   S1005

SET WEIGHT COEFFICIENT W[j]=1

S1006

SET WEIGHT COEFFICIENT W[j]=0

S1007

j < M ?   YES →   S1008

j = j +1

NO ↓

CALCULATE DISTANCE D[i] OF EACH OF N MUSIC INCLUDED IN RETRIEVAL TARGET MUSIC ($1 \leqq i \leqq N$) — S1009

SORT RETRIEVED MUSIC IN ASCENDING ORDER AND OUTPUT SORTED RETRIEVED MUSIC AS RETRIEVAL RESULT — S1010

END

## INTERNATIONAL SEARCH REPORT

| International application No. |
| --- |
| PCT/JP2006/311519 |

A.  CLASSIFICATION OF SUBJECT MATTER
*G06F17/30(2006.01)i*

According to International Patent Classification (IPC) or to both national classification and IPC

B.  FIELDS SEARCHED

Minimum documentation searched (classification system followed by classification symbols)
G06F17/30

Documentation searched other than minimum documentation to the extent that such documents are included in the fields searched
Jitsuyo Shinan Koho        1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)
JSTPlus(JOIS), WPI, INSPEC(DIALOG)

C.  DOCUMENTS CONSIDERED TO BE RELEVANT

| Category* | Citation of document, with indication, where appropriate, of the relevant passages | Relevant to claim No. |
| --- | --- | --- |
| X<br>Y | JP 2003-76717 A  (Nippon Telegraph And Telephone Corp.),<br>14 March, 2003 (14.03.03),<br>Claims 1, 4, 5; Par. Nos. [0048] to [0051];<br>Figs. 2, 3<br>(Family: none) | 1<br>2-4,6-8,10,<br>11,12 |
| Y | JP 2005-56021 A  (KDDI Corp.),<br>03 March, 2005 (03.03.05),<br>Claims 1, 3; Par. Nos. [0012] to [0019]<br>(Family: none) | 2 |
| Y | JP 2002-373177 A  (Olympus Optical Co., Ltd.),<br>26 December, 2002 (26.12.02),<br>Claims 1 to 10<br>& US 2002-0191016 A1 | 3-4,6-7,10,<br>11,12 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    19 July, 2006 (19.07.06) | Date of mailing of the international search report<br>    01 August, 2006 (01.08.06) |
| --- | --- |
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/311519

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2004-171096 A (Pioneer Electronic Corp.), 17 June, 2004 (17.06.04), Claim 1; Par. Nos. [0021] to [0024] & US 2004-0128286 A1 | 8 |
| A | JP 2003-150176 A (Mazda Motor Corp.), 23 May, 2003 (23.05.03), Full text (Family: none) | 1-12 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003157285 A